# EUROPEAN PATENT SPECIFICATION

(11) **EP 4 290 084 B1**
(45) Date of publication and mention of the grant of the patent: **06.11.2024**
(21) Application number: 22177598.4
(22) Date of filing: 07.06.2022
(51) Int. Cl.: F15B 3/00, F15B 11/04, F15B 11/042, F15B 21/0423, A01B 71/00, B62D 5/06, B66D 1/44, F01C 11/00

(54) **HYDRAULIC FLOW BOOST ARRANGEMENT AND HYDRAULIC SYSTEM**
ANORDNUNG ZUR HYDRAULISCHEN FLUSSVERSTÄRKUNG UND HYDRAULISCHES SYSTEM
AGENCEMENT D'AMPLIFICATION D'ÉCOULEMENT HYDRAULIQUE ET SYSTÈME HYDRAULIQUE

(43) Date of publication of application: 13.12.2023
(73) Proprietor: Danfoss Power Solutions ApS, 6430 Nordborg (DK)
(72) Inventor: Rodriguez Carmuega, Victor, Madrid (ES)
(74) Representative: Keil & Schaafhausen Patentanwälte PartGmbB

(56) References cited:
- WO-A1-2012/091942
- WO-A1-2014/099926
- CN-A- 112 758 850
- DE-A1- 102012 208 323
- DE-A1- 2 031 112
- DE-B3- 102011 078 241
- DE-U1- 202012 007 215
- FR-A1- 2 437 512

## Description

The present invention relates to a hydraulic arrangement comprising a first port, a second port and two displacement-type ring gear machines as well as to a hydraulic system comprising such arrangement.

DE 10 2011 078 241 B3 describes a hydraulic unit and a method for using the hydraulic unit. The hydraulic unit comprises a servo-motor driving two pumps, where in the servo-motor and the two pumps are connected via one shaft. Both pumps are fluidly connected to a tank.

DE 20 2012 007 215 U1 describes a hydraulic circuit comprising a hydraulic pump and a hydraulic motor driving the hydraulic pump, and a shutoff valve forming a shut-off circuit, allows pressure to build up between the hydraulic motor and the shut-off valve. A pressure intensifier is provided to compensate for pressure losses in the shut-off circuit. The hydraulic motor is mechanically coupled to the hydraulic pump and drives it.

CN 112758850A describes a hydraulic transformer controller and winch system of deep-water dynamic locating crude oil conveyor devices. The hydraulic transformer s a variable motor rigidly connected by two output shafts, specifically a traditional hydraulic transformer composed of a primary motor and a secondary motor.

FR 2 437 512 A1 discloses another known hydraulic flow boost arrangement.

In many applications of hydraulic systems either the hydraulic consumer is far away from the tank and the power takeoff or the space for hydraulic supply or drive is limited but the system requires a working area having wide range of torque or fluid flow. In such cases, usually either expensive or space-consuming components or systems having a high number of components are used to cope with the above requirements. For example, many farm implements are installed at the front of the tractor, however in many cases the tractor power takeoff is only available at the rear. This forces the implements manufacturer to create two separate structures to avoid installing a long and winding suction pipe: a hydraulic power station structure with pump, tank, filters, cooler at the rear side; and a hydraulic operating system structure with control valves at the front side. In another example, on machines where the engine is mainly used to drive devices other than hydraulic pumps (e.g. generators or electric-machines (EM) for electric propel systems), there is no space to install hydraulic pumps, and, normally, only a small power takeoff with limited torque to drive a steering pump is available. When the system requires higher flow to move any hydraulic work functions, usually a pump through the generator / EM is mounted, which increases the cost of the electrical equipment and creates installation problems due to the high length of the assembly. In a third example, winch drives require high torque/low speed when lifting loads, and high speed/low torque when collecting the cable without load. In these cases, manufacturers often use variable piston motors or large displacement variable pumps thereby causing high installation costs.

An example of the latter system is disclosed in document US 4,501,536 A having two gerotor-type motors with similar displacement volumes. They may be operated in either a series or a parallel mode. When operated in parallel, the known arrangement produces the same torque as a single element equivalent type hydraulic motor but utilizes one half as much fluid flow and runs at a reduced speed. During operation of the motor elements in series, the motor runs at the same speed as a single element motor of equivalent size but at decreased torque. In either mode, the dual element motor utilizes one half the flow of a single element motor. However, the known hydraulic system does not provide enough variability to meet the above needs.

It shall be emphasized that assemblies containing two displacement-type ring gear machines are generally known, for example, from US 4,606,428 A. This document describes a transaxle differential which uses two identical facing rotary displacement mechanisms that better deals with loss of traction situation of two opposite wheels of a vehicle. This, however, is a fully different application and does not help to solve above problems.

Accordingly, the object underlying the invention is to provide a less costly and/or smaller but more universally usable system providing individual solutions or adaptions to the above special requirements.

This problem is solved by a hydraulic flow boost arrangement according to claim 1 having a first port, a second port and a tank for a working fluid and providing a flow boost, wherein the arrangement further comprises a first displacement-type ring gear machine having a first internal gear and a second displacement-type ring gear machine having a second internal gear, wherein an inlet port of the first ring gear machine is connected to the first port, an outlet port of the second ring gear machine is connected to the second port, wherein the first displacement-type ring gear machine is a motor and wherein second displacement-type ring gear machine is a pump, and a first shaft of the first internal gear and a second shaft of the second internal gear are connected such that the first shaft and the second shaft rotate with the same rotational speed. Further, the tank is in fluid communication to a first tank connection line for the working fluid, wherein a first displacement volume of the first ring gear machine is different from a second displacement volume of the second ring gear machine, wherein an inlet port of the second ring gear machine is connected to an outlet port of the first gear machine and the first tank connection line, wherein the tank is in fluid communication to the first tank connection line via a check valve means, wherein the check valve means is configured to prevent backflow of working fluid from the output port of the first ring gear machine into the tank.

In one embodiment, the first ring gear machine and the second ring gear machine is a gerotor or geroler motor.

The above arrangement consists of two displacement-type ring gear machines, e.g. gerotor motors, with different displacement volumes (short: displacements) and connected shafts rotating with the same rotational speed. This comprises that they rotate in the same rotational direction. In one embodiment, the first shaft and the second shaft are directly connected using the same shaft. Accordingly, if the first port is an inlet for hydraulic fluid and the second port is an outlet for the working fluid (the "normal" flow direction of flow boost arrangement operation), the first ring gear machine acts as a pure motor and the second ring gear machine acts as an internal gear pump and they are connected in series. As both rotate with the same rotational speed, the "flow out" of the second motor, i.e. the second port, is the "flow in" of the first motor, i.e. the first port, multiplied by the displacement difference of both gear machines, which is called multiplication ratio in the following. The multiplication ratio is calculated as the ratio of the second displacement volume and the first displacement volume if the working fluid flows from the first port to the second port. It is the reciprocal value if the arrangement is used in the opposite flowing direction, that means the working fluid flows in the opposite direction, i.e. from the second port to the first port. The necessary flow input to compensate the difference between the first and the second gear machine is sucked or fed back via the first tank connection line directly from or to the tank. A check valve means is provided between the tank and the first tank connection line to prevent backflow of working fluid from the output port of the first ring gear machine into the tank if the arrangement is used in the normal flowing direction. As a result of the above operation, the flow boost arrangement provides a fluid flow at the output port (second or first port) that is the fluid flow at the input port (first or second port) multiplied by the multiplication ratio. The multiplication ratio may be less than or greater than 1. In one embodiment, this arrangement acts as a power converter, in such a way that a ratio less than 1 increases the flow rate and decreases the pressure, and in another embodiment with a ratio greater than 1 the arrangement increases the pressure and decreases the flow rate. It shall be emphasized that a ratio close to 1 produces a neutral effect, so that in one embodiment the difference in the ratio should at least compensate for the tolerances and efficiencies of the system, that may lead in one embodiment to a multiplication ratio less than 0.8 or in another embodiment to a multiplication ratio greater than 1.2. Accordingly, the pressure provided at the output port is the pressure at the input port multiplied by the reciprocal of the multiplication ratio. The multiplication ratio may be adapted to the specific need of the respective system in which the arrangement is used by choosing the respective displacement volumes of the first ring gear machine and the second ring gear machine accordingly. In correspondence with the above explanation, flow "boost" is used with regard to this invention in a general way. It is used for an increase of the flow rate from the input port (first or second port) of the flow boost arrangement to the output port (i.e. the respective other port, second or first port) or for a decrease of the flow rate. This depends on the multiplication ratio observed for the respective flow direction of the working fluid through the flow boost arrangement. The invention may be used in any system or arrangement having an incompressible working fluid such as water, oil or similar.

The above object is further solved by a hydraulic system for providing a pre-defined pressure within a suction line of a pump supplying a hydraulic consumer using a pressure line, wherein the hydraulic system comprises a pump with a suction line, a pressure line and a hydraulic consumer with a return line, the pump supplying the hydraulic consumer using the pressure line, wherein the system comprises the hydraulic flow boost arrangement as described above, wherein in a first state the return line of the hydraulic consumer is connected to the first port of the hydraulic flow boost arrangement and the second port of the flow boost arrangement is in fluid communication with the suction line of the pump, wherein the system further comprises a second tank connection line which branches off the suction line and is in fluid communication with the tank of the working fluid of the flow boost arrangement via a check valve means, wherein the check valve means opens if the pressure at the output port of the flow boost arrangement is above a pre-defined pressure threshold value.

In the above system the flow boost arrangement allows the suction line of the pump to remain pressurized regardless of the flow difference between the pump outflow (i.e. the pressure line) and the return line of the hydraulic consumer. Therein the pressure line is in fluid connection with the inlet of the hydraulic consumer, e.g. a differential cylinder, and the return line is connected to the output of the hydraulic consumer. This allows to provide the tank (of the flow boost arrangement and the system) to be installed remote from the pump, for example in an application where the pump is at the rear and the hydraulic consumer with the tank is at the front of a vehicle, e.g. a tractor. This avoids the need to manufacture two structures (e.g. in the front and in the rear) for a single implement. In this embodiment, the second tank connection line connected to the tank with the second check valve means ensures a constant pressure (corresponding to the pre-defined pressure threshold value) in the suction line by compensating for the pressure losses due to the pipe length and the unevenness between pump and tank and balances the inlet pump flow in the suction line to the outlet pump flow in the pressure line. In one embodiment, the multiplication ratio of the flow boost arrangement is greater than 1.5, for example greater than 2.

In one embodiment of the above system, the hydraulic consumer is a differential cylinder, wherein the multiplication ratio of the flow boost arrangement is greater than a sections ratio of the differential cylinder, for example by 0.5 or by 1. This may compensate for pressure losses along the suction line of the pump.

In one embodiment of the above system, the system further comprises a selector valve within the return line, wherein in a first position of the selector valve the system adopts the first state and in a second position of the selector valve the system adopts a second state in which the flow boost arrangement is bypassed. Bypassing the flow boost arrangement means in this embodiment, that the return line is in fluid connection with the suction line without passing the flow boost arrangement. This embodiment has the advantage that the flow boost function may be overridden when the return flow is greater than the flow in the pressure line (pump flow). This may be the case in a back movement the hydraulic consumer, e.g. the differential cylinder.

In one embodiment, the system may provide another check valve means in the suction line between the branching off of the second tank connection line and the inlet port of the pump. Alternatively or additionally, the system may provide a fourth check valve means parallel to the second check valve means but acting in the opposite direction. The third and fourth check valve means prevent cavitation during the pump start-up, wherein the third check valve means maintains flow in the suction line when the pump is stopped and the fourth check valve means allows direct suction from the tank while the flow boost arrangement is starting.

In one embodiment, in the return line, the system may comprise a filter means and/or a cooling means. Additionally or alternatively, the system may comprise a 4/3 way valve or a 4/2 way valve within the return line and the pressure line, thereby realizing a first moving direction, an opposite second moving direction of the hydraulic consumer (e.g. a differential cylinder) and/or a stop or idle position of the system.

The above object is further solved by a hydraulic system for providing a pre-defined flow range at an inlet port of a hydraulic consumer which is supplied with a pressurized working fluid by a pump, wherein the hydraulic system comprises a pump and a hydraulic consumer with an inlet port, wherein the system comprises the flow boost arrangement as described above, wherein in a first state a supply port of the pump is connected to the to the first port of the flow boost arrangement and the second port of the flow boost arrangement is connected to the inlet port of the hydraulic consumer, wherein in the first state the flow boost arrangement is used in the normal flowing direction. This allows, for example, a steering pump to be used to move work functions at the hydraulic consumer that require higher flow at lower pressure. Accordingly, in one embodiment, the pump may be connected to the first port of the flow boost arrangement via a known steering unit. This avoids to mount a pump through a generator or electric machine if there is no space to install hydraulic pumps and thereby the cost of the electrical equipment. Additionally, such system reduces the total length and facilitates the design of the structure since the flow boost arrangement can be installed anywhere. In one embodiment the multiplication ratio of the flow boost arrangement is greater than 1.5, for example greater than 2.5.

In one embodiment of the above system, the system further comprises a selector valve having at least a first position and a second position, wherein in the first position the system adopts the first state and the second position of the selector valve the system adopts a second state in which the flow boost arrangement is bypassed. Bypassing the flow boost arrangement means in this embodiment, that the support port of the pump is in fluid connection with the inlet port of the hydraulic consumer without passing the flow boost arrangement. This embodiment has the advantage that the flow boost function may be overridden when the greater flow provided by the flow boost arrangement is not needed by the hydraulic consumer. The hydraulic consumer may be, for example a differential cylinder or a hydraulic motor. The outlet port of the hydraulic consumer may be in fluid connection with the tank.

In one embodiment of the above system, further the selector valve comprises a third position, wherein in the third position of the selector valve the system adopts the third state in which the supply port of the pump is connected to the second port of the flow boost arrangement and the first port of the flow boost arrangement is connected to the inlet port of the hydraulic consumer, and wherein the rotation direction of the first shaft and the second shaft is reversed compared with the rotation direction of the state in which the selector valve is in the second position. In the third state the fluid flow in the flow boost arrangement is reversed with regard to the first state. This means that the multiplication ratio of the flow boost arrangement in this state corresponds to the reciprocal value of the multiplication ratio used in the first state. Such embodiment may be used if on the one hand high speed / low torque and on the other hand low speed / high torque is needed. For example, winch drives require high torque/low speed when lifting loads, and high speed/low torque when collecting the cable without load, i.e. the winch drive motor is an example of a hydraulic consumer. In this embodiment of the invention, however, the selector valve, e.g. a solenoid valve, may control input flow to the flow boost arrangement in such a way that three states are realized. In the first state the flow boost arrangement is activated such that the multiplication ratio is greater than 1 so that the input flow to the winch drive motor inlet port increases and, proportionally, the maximum available pressure at the winch drive motor inlet port decreases. In the second state, where the flow boost arrangement is bypassed the flow boost arrangement is deactivated and the system works without any flow or pressure boost. In the third state the flow boost arrangement operates in a "negative" flow boost mode which means that the maximum available pressure at the winch drive motor inlet port increases and, proportionally, the input flow to the winch drive motor inlet port decreases.

In one embodiment, the system may comprise a 4/3 way valve or a 4/2 way valve within the fluid connection line prior the inlet port of the hydraulic consumer and after the outlet port of the hydraulic consumer, thereby realizing a first moving direction, an opposite second moving direction of the hydraulic consumer (e.g. a differential cylinder) and/or a stop or idle position of the system.

The above object is further solved by a hydraulic system for increasing cooling efficiency comprising a pump, a hydraulic consumer, a working fluid tank, a cooling means and the flow boost arrangement as described above, wherein the tank of the flow boost arrangement is in fluid connection with the working fluid tank or forms the working fluid tank, wherein the pump provides the hydraulic consumer with cooled working fluid from the working fluid tank, wherein in a first state an outlet port of the hydraulic motor is in fluid connection with the first port of the flow boost arrangement and the second port of the flow boost arrangement is in fluid connection with an input port of the cooling means and an output port of the cooling means is in fluid connection with the working fluid tank such that the cooled working fluid is lead back to the working fluid tank. In one embodiment of this system, a multiplication ratio of the flow boost arrangement is greater than 1, for example greater than 2. Since the working fluid tank is in fluid connection with the tank of the flow boost arrangement or the tank of the flow boost arrangement forms the working fluid tank, in this embodiment a closed loop cooling system is created comprising the working fluid tank and, if applicable, the tank of the flow boost arrangement, the first tank connection line, the second displacement-type ring gear machine, the second port of the flow boost arrangement, the line connecting this port to the cooling means, the cooling means and the tank connection line connecting the output port of the cooling means with the working fluid tank. Within the flow boost arrangement, the working fluid from the tank provided by the first tank connection line mixes with the working fluid being at an elevated temperature from the hydraulic consumer thereby providing a first cooling step. Additionally, the flow boost arrangement provides an increase in the inlet flow so that the cooling means may be used at a higher flow rate thereby increasing heat dissipation.

In one embodiment, the above system further comprises a filter means located in the working fluid connection line connecting the second port of the flow boost arrangement and to the cooling means.

In one embodiment of the above system, the system further comprises a selector valve, e.g. a solenoid valve, having at least a first position and a second position, wherein in the first position the system adopts the first state and the second position of the selector valve the system adopts a second state in which the flow boost arrangement is bypassed. Bypassing the flow boost arrangement means in this embodiment, that the outlet port of the hydraulic consumer is in fluid connection with the inlet port of the cooling means without passing the flow boost arrangement. This embodiment has the advantage that the flow boost function may be overridden when the greater cooling efficiency provided by the flow boost arrangement is not needed in the system. The hydraulic consumer may be, for example, a differential cylinder or a hydraulic motor.

In one embodiment of above systems, the first tank connection line may be in fluid communication with the tank via a filter means to filter the working fluid when leaving the tank.

Embodiments of the invention will now be described with reference to the drawing, in which schematically and exemplarily
- Fig. 1: depicts a hydraulic circuit of an embodiment of the hydraulic flow boost arrangement,
- Fig. 2: shows a first embodiment of a hydraulic system for a hydraulic consumer mounted at a tractor,
- Fig. 3: depicts a hydraulic circuit of the embodiment of Fig. 2,
- Fig. 4: depicts a hydraulic circuit of a second embodiment of a hydraulic system,
- Fig. 5-7: show the operation of a third embodiment of a hydraulic system comprising a hydraulic motor driving a winch in different states,
- Fig. 8: shows a hydraulic circuit of the embodiment of Fig. 5 to 7 in a second state,
- Fig. 9: shows the hydraulic circuit of the embodiment of Fig. 5 to 7 in a first state,
- Fig. 10: shows the hydraulic circuit of the embodiment of Fig. 5 to 7 in a third state,
- Fig. 11: shows a hydraulic circuit of a fourth embodiment of a hydraulic system in a second state,
- Fig. 12: depicts the hydraulic circuit of the embodiment of Fig. 11 in a first state,
- Fig. 13: shows a heat dissipation diagram for different coolers at different rotation speed, and
- Fig. 14: depicts a hydraulic circuit of a first state of a fifth embodiment of a hydraulic circuit.

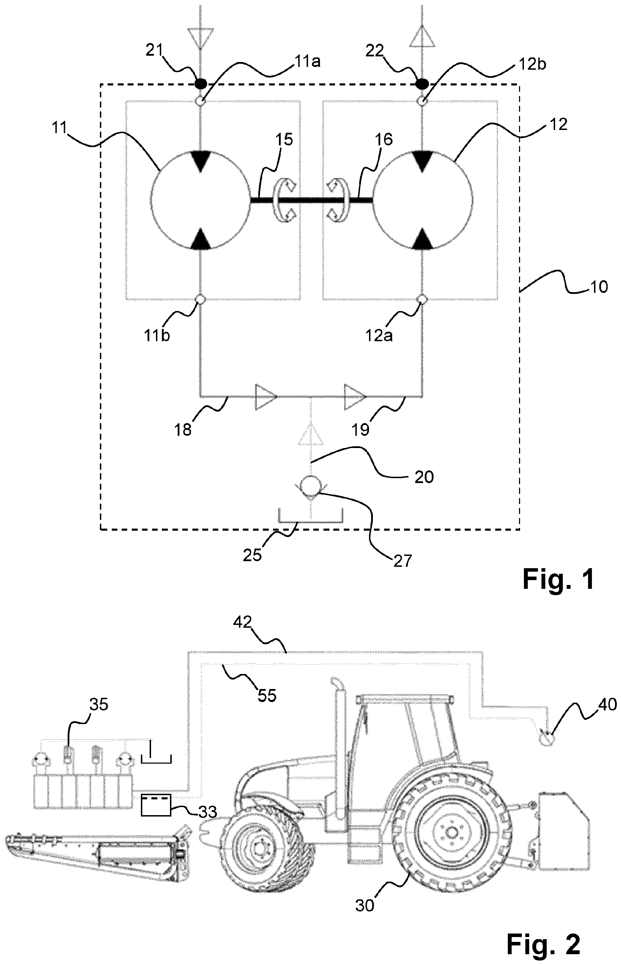

Fig. 1 shows an embodiment of a hydraulic flow boost arrangement 10 comprising a first gerotor motor 11 and a second gerotor motor 12 wherein a first shaft 15 of the first gerotor motor 11 is directly connected to a second shaft 16 of the second gerotor motor 12 such that the first shaft 15 and the second shaft 16 rotate with the same rotational speed in the same direction. As shown in Fig. 1 the first shaft 15 and the second shaft 16 form a common shaft. The flow boost arrangement 10 further comprises a first port 21 connected to the inlet port 11a of the first gerotor motor 11 and a second port 22 connected to the outlet port 12b of the second gerotor motor 12. An outlet port 11b of the first gerotor motor 11 is in fluid communication with the inlet port 12a of the second gerotor motor 12 via conduits 18 and 19. Further, a working fluid tank 25 is provided which is in fluid communication with the inlet port 12a of the second gerotor motor via the first tank connection line 20 and conduit 19, wherein in the first tank connection line 20 a check valve 27 is provided to avoid backflow of the working fluid into the tank 25.

In the embodiment shown in Fig. 1 working fluid flows from the first port 21 to the input port 11a of the first gerotor motor 11 that operates as a motor driving by its first shaft 15 the second shaft 16 of the second gerotor motor 12 that operates as a pump. The working fluid is communicated from the output port 11b of the first gerotor motor 11 to the input port 12a of the second gerotor motor 12. The second gerotor motor 12 pumps the working fluid to its output port 12b and further to the second port of the flow boost arrangement. In this embodiment, the first displacement volume V1 of the first gerotor motor 11 is, e.g., V1 = 100 cm³ and the second displacement volume V2 of the second gerotor motor 12 is, e.g. V2 = 200 cm³. Accordingly, the multiplication ratio of the flow boost arrangement in the shown operation mode is V2/V1 = 2. Accordingly, if, for example, a flow rate of 20 l/min is provided at the first port 21, the second gerotor motor 12 pumps a flow rate of 40 l/min working fluid and provides this flow rate at its second port 22. The second gerotor motor 12 receives 20 l/min from the first gerotor motor 11 and sucks another 20 l/min from the working fluid tank 25. Hence, the flow boost arrangement doubles the input flow rate received at its first port 21 in accordance with its multiplication ratio and provides it at its second port 22. Correspondingly, the pressure at the second port drops approximately by a factor equal to the multiplication ratio compared with the pressure at the first port.

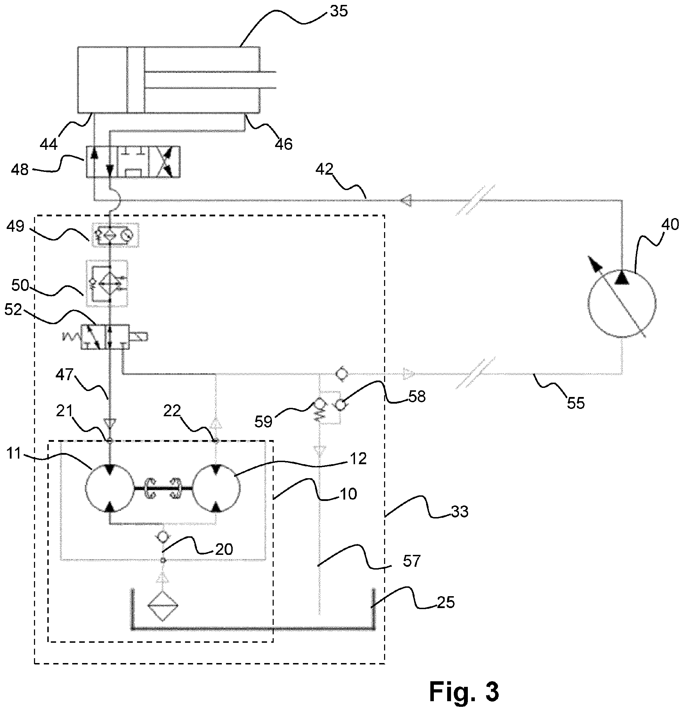

Fig. 2 and 3 show a first application of a flow boost arrangement 10 which is, for example, an application for use in a large vehicle like a tractor 30. The tractor 30 comprises a manifold of different hydraulic consumers, containing, e.g. a differential cylinder 35 in the front as well as the tank 25 for a working fluid, a cooling means 50, a filter means 49 and the flow boost arrangement 10 as shown in more detail in Fig. 3. The flow boost arrangement 10 with tank 25, the cooling means (cooler) 50, the filter means (filter) 49, a selector valve 52 as well as a second tank connection line 53 forming an assembly 33 which is shown in Fig. 2, wherein Fig. 2 symbolizes the local set-up of the system's components.

In the first state of the system shown in Fig. 3 the pressurized output flow of a pump 40 is connected via a pressure line 42 to an inlet port 44 of the differential cylinder 33. The second (output) port 46 of the differential cylinder 33 is in fluid connection with the first port 21 of the flow boost arrangement 10 via a return line 47, a 4/3 way valve 48, the filter means 49, the cooler means 50 and a solenoid selector valve 52 having a first position as shown in Fig. 3. The second port 22 of the flow boost arrangement 10 is connected via a suction line 55 to the input port of the pump 40. The flow boost arrangement 10 may be constructed similar to the flow boost arrangement 10 shown in Fig. 1 but having a multiplication ratio of 2.5, wherein, for example, the first gerotor 11 has a displacement volume of 100 cm3 and the second gerotor 12 a displacement volume of 250 cm3 producing a magnification ratio of 2.5. The input flow rate at the first port 11 of the flow boost arrangement 10 is, for example, 10 l/min revealing an output flow rate at the second port 12 of the flow boost arrangement 10 of 25 l/min. The tank 25 of the working fluid is further in fluid communication via a second tank connecting line 57 with the suction line 55. In the second tank connecting line 57, a check valve 58 is provided. Further, parallel to the check valve 58 second check valve 59 is accommodated, wherein the second check valve 59 is provided which opens if the pressure above the check valve 59 is higher than a pre-defined threshold value, e.g. 2 bar. The 2 bar check valve 59 ensures a constant pressure in the suction line 55 thereby compensating for the pressure losses due to the pipe length and the unevenness between pump and tank. It further balances the inlet pump flow to the outlet pump flow at, e.g., 20 l/min. Accordingly, the working fluid flows into the tank 25 via the second tank connecting line 57 if the flow rate at the inlet of check valve 59 is greater than or equal to 5 l/min and the pressure at the check valve 59 is greater than 2 bar.

It shall be indicated, that according to the embodiment present at Fig. 2 and 3 the differential cylinder 33 may have a sections ratio of 2:1. For such sections rate the above dimensions of the elements having the above flow boost arrangement 10 as indicated above may be used.

In a second position of the selector valve 52 the system provides a second state, in which the flow boost arrangement 10 is bypassed by connecting the return line 47 to the suction line 55. This state is used if there is a higher pressure in the return line 47.

Further, the system comprises a 4/3 way valve 48 realizes a first and a second movement direction (left and right position) of the differential cylinder 33 as well as a stop/idle state (middle position).

The system shown in Fig. 2 and 3 allows the suction line 55 to remain pressurized regardless of the flow difference between the pressure line 42 and the suction line 55.

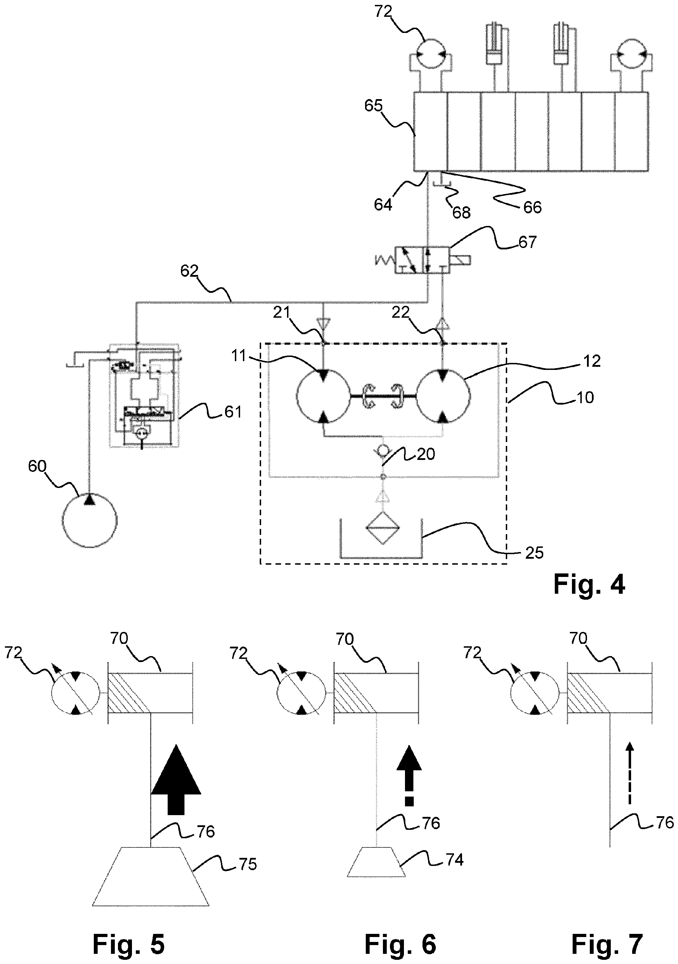

Another application of the flow boost arrangement is shown in the embodiments of Fig. 4 to 12 in which systems are described realizing states proving different flow rates / torque to a hydraulic consumer (e.g. a motor 72 or a differential cylinder 83).

The embodiment shown in Fig. 4 allows a steering pump to be used to move work functions that requires higher flow at lower pressure (first state) and lower flow at higher pressure (second state). A pump 60 is connected via a steering unit 61 to a conduit 62. The conduit 62 may be connected with an overpressure relief element 63 which provides in the second state of a solenoid selector valve 67 as shown in Fig. 4 the working fluid flowing in conduit 62 bypasses the flow boost arrangement 10 similar to the one depicted in Fig. 1 and is in fluid communication with the inlet port 64 of a manifold 65 comprising several hydraulic consumers such as a differential cylinder or a motor (e.g. motor 72). The outlet port 66 of the manifold 65 is connected to a tank 68. In the second state, the flow rate is rather small. If the solenoid selector valve 67 is in the second position the system adopts a first state providing a higher flow rate at the manifold inlet port 64 than in the second state. In this case, the conduit 62 is connected to the first port 21 of the flow boost arrangement 10, wherein the second port 22 of the flow boost arrangement 10 is connected to the inlet port 64 of the manifold 65. In the first state the flow rate at the second port 22 of the flow boost arrangement 10 is the flow rate at the first port 21 of the flow boost arrangement 10 multiplied by the multiplication ratio. Accordingly, if the multiplication ratio is greater than 1 the flow rate at the inlet port 64 will be greater in the first state compared with the second state of the system and the torque provided at the inlet port 64 is calculated from the pressure at the first port 21 of the flow boost arrangement 10 by applying a factor that is the reciprocal of the multiplication ratio.

The embodiment of a system depicted in Fig. 5 to 10 comprises a winch 70 that is driven by the hydraulic motor 72 forming a hydraulic consumer. The system realizes three states that are shown in Fig. 5 to 7. In the first state depicted in Fig. 7, a high flow and low torque is needed at the input port of the hydraulic motor 72 to rotate the winch 70 fast with low load (to collect the cable 76). Fig. 6 shows the situation (third state) in which a medium flow and torque is needed at the input port of the hydraulic motor 72 to lift a medium-sized load 74. In the second state illustrated in Fig. 5 the hydraulic motor 72 lifts a high load 75 so that a low flow rate and a high torque is needed at the input port of the hydraulic motor 72.

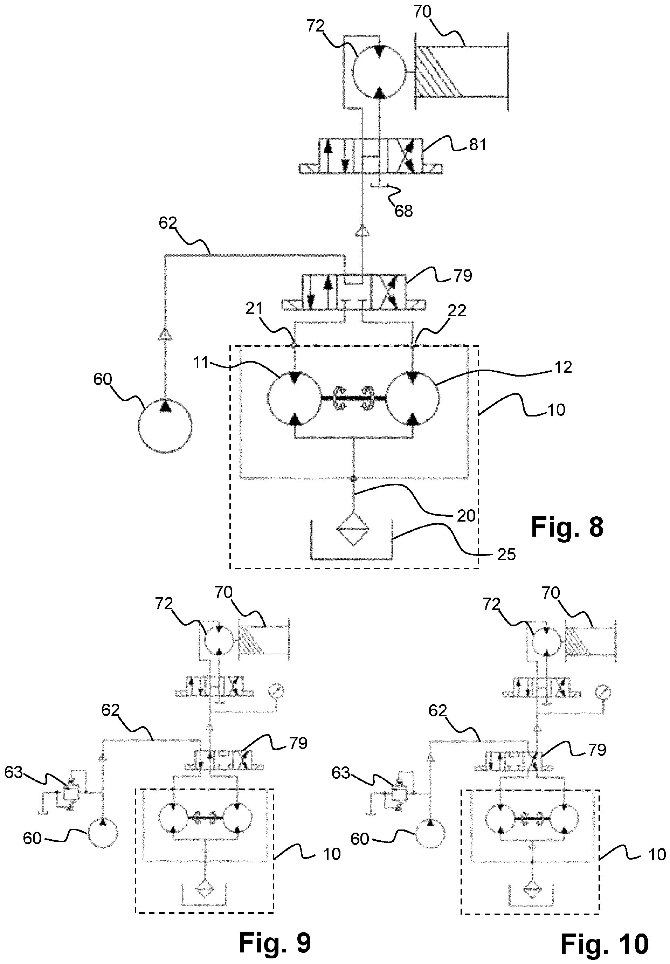

Analogous to the embodiment shown in Fig. 4 the system comprises the pump 60, the conduit 62, the flow boost arrangement 10 (the check valve 27 is not shown), a first 3/4 way selector valve 79, a second 3/4 way selector valve 81, the hydraulic motor 72 and the tank 68 as depicted in Fig. 8 to 10 showing different states of the system. The pump pressurizes the input port of the hydraulic motor 72 for the winch 70 via the first selector valve 79 and the second selector valve 81. The first selector valve 79 is used to select one of three different states of the system dependent on the position of the valve 79. By the second selector valve 81 the user chooses the rotation direction of the winch (first direction if the left position is taken and second, opposite direction if the right position is taken). If the second selector valve 81 uses the center position as indicated in Fig. 8 to 10 the system is in a stop or idle position.

The second state depicted in Fig. 6 is realized by the system by taking the center position of the selector valve 79 as shown in Fig. 8. The pump, for example, provides the working fluid with a flow rate of 50 l/min and a pressure of 200 bar. A medium rotation speed of the hydraulic motor 72 is provided.

The first state shown in Fig.7 is adopted by using the selector valve 79 such that it accommodates the left position (see Fig. 9). The working fluid passes the flow boost arrangement 10 thereby increasing the flow rate from 50 l/min to 100 l/min and reducing the pressure from 200 bar to 100 bar. Accordingly, the winch 70 may be moved with high rotation speed but lifts only a small load due to its low torque provided.

In the latter position of the first selector valve 79 (right position) shown in Fig. 10 the direction of the fluid flow through the flow boost arrangement 10 is reversed so that the inlet flow is provided at the second port 22 and the outlet flow at the first port 21. Accordingly, the multiplication ratio is the reverse value compared to the multiplication factor used in the first state of the system (see Fig. 7 and 9).

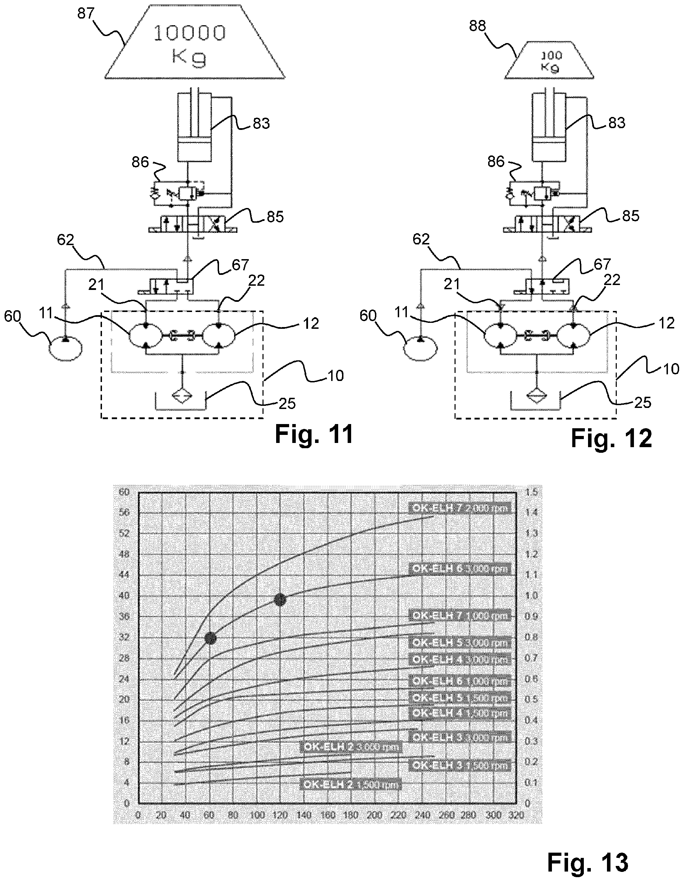

Fig. 11 and 12 depict an embodiment of the system similar to the one illustrated in Fig. 3 and 4, wherein the hydraulic consumer is a differential cylinder 83, that works similar to the embodiment shown in Fig. 3. The system further comprises additionally a 4/3 way selector valve 85 for selecting the moving direction of the hydraulic cylinder 83 (left and right position) and for providing a stop or idle position. Additionally or alternatively, the system may comprise a counterbalance valve 86 accommodated in the conduit between the hydraulic cylinder 83 and the selector valve 85. The system realizes a first state shown in Fig. 12 where a low load 88 may be moved with high speed due to flow boost provided by the flow boost arrangement 10 (the check valve 27 is not shown).

In the second state the flow boost arrangement 10 is bypassed so that a higher load 87 may be moved by the differential cylinder 83 at lower speed (low flow, high pressure)
Fig. 13 shows a diagram in which on the left-hand side the heat dissipation at ΔT = 40°C is drawn for different cooler types (OK-ELH 3, 4, 5, 6 and 7) used at different rotational speed (1000, 1500, 2000, 3000 rpm) over the flow rate of the coolant oil in l/min. On the right-hand side the respective specific heat dissipation [kW/K] is provided. Both marked points 87 and 88 illustrate, for example, that for the cooler OK-ELH 6 by using a coolant flow rate of 60 l/min a heat dissipation of 32 kW is provided whereas with the same cooler type and a double flow rate of 120 kW a heat dissipation of 40 kW may be provided. This is 25% more than when using the flow rate of 60 l/min. Accordingly, the heat dissipation may be considerably increased by increasing the flow rate. Hence, usually designers of cooling systems select the size of the cooler based on the flow available for cooling which may be expensive for larger flow rates.

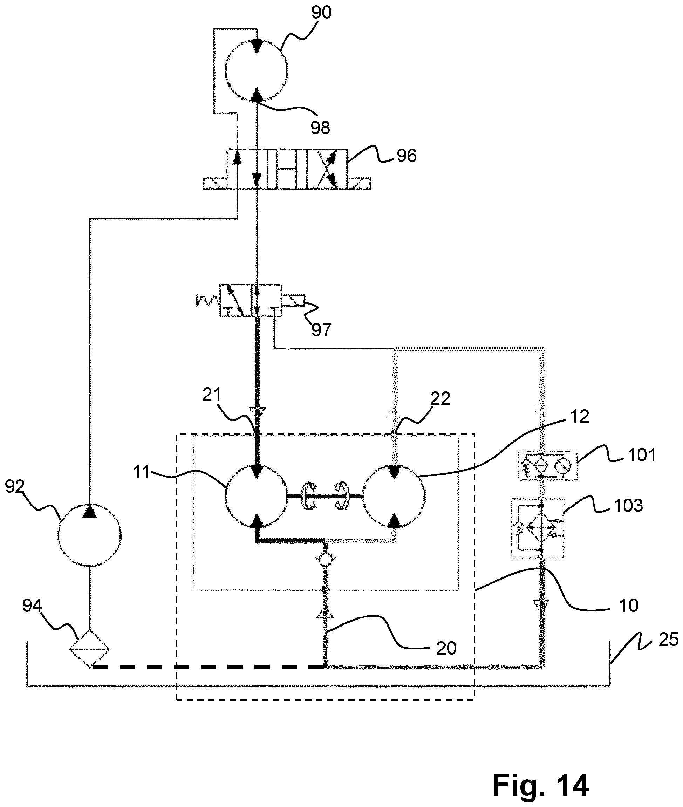

Accordingly, the embodiment shown in Fig. 14 provides a system having an increased cooling rate. This is realized by using the flow boost arrangement as depicted in Fig. 1 and creating a closed loop system component that decreases the temperature faster thereby increasing cooling efficiency.

This system comprises a tank 25 which supplies the flow boost arrangement 10 with the working fluid but also a hydraulic consumer in form of a motor 90. Particularly, the tank comprises cooled working fluid to the motor 90 driven by a pump 92 and a filter 94. The rotational direction of the motor 90 as well as the stop/idle position of the system is controlled by a 4/3 way selector valve 96. An output port 98 of the motor 90 is in fluid communication with the first port 21 of the flow boost arrangement 10 via a second solenoid selector valve 98. The second selector valve 98 has two positions. If the second selector valve 98 is in the first position shown in Fig. 14, a first state will be adopted in which increased cooling will be provided by the flow boost arrangement 10. In the second position of the second selector valve 98 the flow boost arrangement 10 is bypassed thereby providing lower heat dissipation as indicated below (second state).

Referring to the first state shown in Fig. 14 the second port 22 is in fluid communication with the tank 25 via a filter means 101 and a cooling means 103. Accordingly, the working fluid cooled by the cooling means 103 flows back into tank 25. Because the flow boost arrangement 10 comprises the tank 25, as well, as a source for additional flow for provision to the second gerotor 12, the cooled working fluid is mixed with the working fluid received from the motor 90 at the inlet port of the second gerotor 12. Accordingly, a closed loop is created comprising the second gerotor 12, the filter means 101, the cooling means 103 and the tank 25.

In the second state, the working fluid returning from the motor 90 flows back into the tank 125 via the filter means 101 and the cooling means 103 without passing the flow boost arrangement 10. In this state a closed loop is created without passing the geroler motors 11, 12 of the flow boost arrangement thereby causing a reduced heat dissipation compared with the first state.

## Claims

1. A hydraulic flow boost arrangement (10) comprising a first port (21), a second port (22) and a tank (25) for a working fluid, further comprising a first displacement-type ring gear machine (11) having a first internal gear and a second displacement-type ring gear machine (12) having a second internal gear, wherein an inlet port (11a) of the first ring gear machine (11) is connected to the first port (21) and an outlet port (12b) of the second ring gear machine (12) is connected to the second port (22), wherein the first displacement-type ring gear machine (11) is a motor and wherein second displacement-type ring gear machine (12) is a pump, wherein the tank (25) is in fluid communication to a first tank connection line (20) for the working fluid, wherein a first shaft (15) of the first internal gear and a second shaft (16) of the second internal gear are connected such that the first shaft (15) and the second shaft (16) rotate with the same rotational speed, wherein a first displacement volume (V1) of the first ring gear machine (11) is different from a second displacement volume (V2) of the second ring gear machine (12), wherein an inlet port (12a) of the second ring gear machine (12) is connected to an outlet port (11b) of the first gear machine (11) and the first tank connection line (20), wherein the tank (25) is in fluid communication to the first tank connection line (20) via a check valve means (27), wherein the check valve means (27) is configured to prevent backflow of working fluid from the output port (11b) of the first ring gear machine (11) into the tank (25).

2. The hydraulic flow boost arrangement of claim 1, wherein the first ring gear machine (11) and the second ring gear machine (12) is a gerotor or geroler motor.

3. The hydraulic flow boost arrangement of any one of the previous claims, wherein the first shaft (15) and the second shaft (16) are directly connected.

4. A hydraulic system for providing a pre-defined pressure within a suction line (55) of a pump (40) supplying a hydraulic consumer (35) using a pressure line (42), wherein the hydraulic system comprises a pump (40) with a suction line (55), a pressure line (42) and a hydraulic consumer (35) with a return line (47), the pump (40) supplying the hydraulic consumer (35) using the pressure line (42), wherein the system comprises the hydraulic flow boost arrangement (10) of any one of the previous claims, wherein in a first state the return line (47) of the hydraulic consumer (35) is connected to the first port (21) of the hydraulic flow boost arrangement (10) and the second port (22) of the hydraulic flow boost arrangement (10) is in fluid communication with the suction line (55) of the pump (40), wherein the system further comprises a second tank connection line (57) which branches off the suction line (55) and is in fluid communication with the tank (25) of the working fluid of the hydraulic flow boost arrangement (10) via a second check valve means (59), wherein the second check valve means (59) opens if the pressure at the output port (22) of the hydraulic flow boost arrangement (10) is above a pre-defined pressure threshold value.

5. The hydraulic system of claim 4, wherein a multiplication ratio of the hydraulic flow boost arrangement (10) is greater than 1, for example greater than 2.5.

6. The hydraulic system of any one of the claims 4 to 5, wherein the hydraulic consumer (35) is a differential cylinder, wherein the multiplication ratio of the hydraulic flow boost arrangement (10) is greater than a sections ratio of the differential cylinder.

7. The hydraulic system of any one of the claims 4 to 6, further comprising a selector valve (52), wherein in a first position of the selector valve (52) the system adopts the first state and in a second position of the selector valve (52) the system adopts a second state in which the hydraulic flow boost arrangement (10) is bypassed.

8. A hydraulic system for providing a pre-defined flow range at an inlet port of a hydraulic consumer (72, 83) which is supplied with a pressurized working fluid by a pump (60), wherein the hydraulic system comprises a pump (60) and a hydraulic consumer (72, 83) with an inlet port, wherein the system comprises the hydraulic flow boost arrangement (10) of any one of the claims 1 to 3, wherein in a first state a supply port of the pump is connected to the first port (21) of the hydraulic flow boost arrangement (10) and the second port (22) of the hydraulic flow boost arrangement (10) is connected to the inlet port of the hydraulic consumer (72).

9. The hydraulic system of claim 8, further comprising a selector valve (67, 79) having at least a first position and a second position, wherein in the first position the system adopts the first state and the second position of the selector valve the system adopts a second state in which the hydraulic flow boost arrangement (10) is bypassed.

10. The hydraulic system of any one of the claims 8 to 9, wherein the selector valve (79) comprises a third position, wherein in the third position of the selector valve (79) the system adopts the third state in which the supply port of the pump (60) is connected to the second port (22) of the hydraulic flow boost arrangement (10) and the first port (21) of the hydraulic flow boost arrangement (10) is connected to the inlet port of the hydraulic consumer (72), and wherein the rotation direction of the first shaft (15) and the second shaft (16) is reversed compared with the rotation direction of the state in which the selector valve (79) is in the second position.

11. The hydraulic system of any one of the claims 8 to 10, wherein a multiplication ratio of the hydraulic flow boost arrangement (10) is greater than 1, for example greater than 2.

12. A hydraulic system for increasing cooling efficiency comprising a pump (92), a hydraulic consumer (90), a working fluid tank (25), a cooling means (103) and the hydraulic flow boost arrangement (10) of any one of the claims 1 to 3, wherein the tank (25) of the hydraulic flow boost arrangement (10) is in fluid connection with the working fluid tank or forms the working fluid tank, wherein the pump (92) provides the hydraulic consumer (90) with cooled working fluid from the working fluid tank (25), wherein in a first state an outlet port (98) of the hydraulic consumer (90) is in fluid connection with the first port (21) of the hydraulic flow boost arrangement (10) and the second port (22) of the hydraulic flow boost arrangement (10) is in fluid connection with an input port of the cooling means (103) and an output port of the cooling means (103) is in fluid connection with the working fluid tank (25) such that the cooled working fluid is lead back to the working fluid tank (25).

13. The hydraulic system of claim 12, further comprising a selector valve (97) having at least a first position and a second position, wherein in the first position the system adopts the first state and the second position of the selector valve the system adopts a second state in which the hydraulic flow boost arrangement (10) is bypassed.

14. The hydraulic system of any one of the claims 13 to 14, wherein a multiplication ratio of the hydraulic flow boost arrangement (10) is greater than 1, for example greater than 2.

## Patentansprüche

1. Hydraulische Flussverstärkungsanordnung (10) mit einem ersten Anschluss (21), einem zweiten Anschluss (22) und einem Tank (25) für ein Arbeitsfluid, ferner umfassend eine erste Verdrängungszahnringmaschine (11) mit einem ersten Innenrad und eine zweite Verdrängungszahnringmaschine (12) mit einem zweiten Innenrad, wobei ein Einlassanschluss (11a) der ersten Zahnringmaschine (11) mit dem ersten Anschluss (21) verbunden ist und ein Auslassanschluss (12b) der zweiten Zahnringmaschine (12) mit dem zweiten Anschluss (22) verbunden ist, wobei die erste Verdrängungszahnringmaschine (11) ein Motor ist und die zweite Verdrängungszahnringmaschine (12) eine Pumpe ist, wobei der Tank (25) in Fluidverbindung mit einer ersten Tankverbindungsleitung (20) für das Arbeitsfluid steht, wobei eine erste Welle (15) des ersten Innenrads und eine zweite Welle (16) des zweiten Innenrads so verbunden sind, dass sich die erste Welle (15) und die zweite Welle (16) mit der gleichen Drehzahl drehen, wobei ein erstes Verdrängungsvolumen (V1) der ersten Zahnringmaschine (11) sich von einem zweiten Verdrängungsvolumen (V2) der zweiten Zahnringmaschine (12) unterscheidet, wobei ein Einlassanschluss (12a) der zweiten Zahnringmaschine (12) mit einem Auslassanschluss (11b) der ersten Zahnradmaschine (11) und der ersten Tankverbindungsleitung (20) verbunden ist, wobei der Tank (25) über ein Rückschlagventil (27) mit der ersten Tankverbindungsleitung (20) in Fluidverbindung steht, wobei das Rückschlagventil (27) dazu ausgelegt ist, einen Rückfluss von Arbeitsfluid vom Auslassanschluss (11b) der ersten Zahnringmaschine (11) in den Tank (25) zu verhindern.

2. Hydraulische Flussverstärkungsanordnung nach Anspruch 1, wobei die erste Zahnringmaschine (11) und die zweite Zahnringmaschine (12) ein Gerotor- oder Geroler-Motor sind.

3. Hydraulische Flussverstärkungsanordnung nach einem der vorhergehenden Ansprüche, wobei die erste Welle (15) und die zweite Welle (16) direkt miteinander verbunden sind.

4. Hydrauliksystem zur Bereitstellung eines vordefinierten Drucks innerhalb einer Saugleitung (55) einer Pumpe (40), die einen hydraulischen Verbraucher (35) über eine Druckleitung (42) versorgt, wobei das hydraulische System eine Pumpe (40) mit einer Saugleitung (55), eine Druckleitung (42) und einen hydraulischen Verbraucher (35) mit einer Rücklaufleitung (47) umfasst, wobei die Pumpe (40) den hydraulischen Verbraucher (35) über die Druckleitung (42) versorgt, wobei das System die hydraulische Flussverstärkungsanordnung (10) nach einem der vorhergehenden Ansprüche umfasst, wobei in einem ersten Zustand die Rücklaufleitung (47) des hydraulischen Verbrauchers (35) mit dem ersten Anschluss (21) der hydraulischen Flussverstärkungsanordnung (10) verbunden ist und der zweite Anschluss (22) der hydraulischen Flussverstärkungsanordnung (10) in Fluidverbindung mit der Saugleitung (55) der Pumpe (40) steht, wobei das System ferner eine zweite Tankverbindungsleitung (57) umfasst, die von der Saugleitung (55) abzweigt und über ein zweites Rückschlagventil (59) in Fluidverbindung mit dem Tank (25) des Arbeitsfluids der hydraulischen Flussverstärkungsanordnung (10) steht, wobei sich das zweite Rückschlagventil (59) öffnet, wenn der Druck am Ausgangsanschluss (22) der hydraulischen Flussverstärkungsanordnung (10) über einem vordefinierten Druckschwellenwert liegt.

5. Hydrauliksystem nach Anspruch 4, wobei ein Übersetzungsverhältnis der hydraulischen Flussverstärkungsanordnung (10) größer als 1, beispielsweise größer als 2,5 ist.

6. Hydrauliksystem nach einem der Ansprüche 4 bis 5, wobei der hydraulische Verbraucher (35) ein Differentialzylinder ist, wobei das Übersetzungsverhältnis der hydraulischen Flussverstärkungsanordnung (10) größer als ein Flächenverhältnis des Differentialzylinders ist.

7. Hydrauliksystem nach einem der Ansprüche 4 bis 6, ferner umfassend ein Umschaltventil (52), wobei in einer ersten Position des Umschaltventils (52) das System den ersten Zustand annimmt und in einer zweiten Position des Umschaltventils (52) das System einen zweiten Zustand annimmt, in dem die hydraulische Flussverstärkungsanordnung (10) umgangen wird.

8. Hydrauliksystem zur Bereitstellung eines vordefinierten Durchflussbereichs an einem Einlassanschluss eines hydraulischen Verbrauchers (72, 83), der durch eine Pumpe (60) mit einem unter Druck stehenden Arbeitsfluid versorgt wird, wobei das Hydrauliksystem eine Pumpe (60) und einen hydraulischen Verbraucher (72, 83) mit einem Einlassanschluss umfasst, wobei das System die hydraulische Flussverstärkungsanordnung (10) nach einem der Ansprüche 1 bis 3 umfasst, wobei in einem ersten Zustand ein Versorgungsanschluss der Pumpe mit dem ersten Anschluss (21) der hydraulischen Flussverstärkungsanordnung (10) verbunden ist und der zweite Anschluss (22) der hydraulischen Flussverstärkungsanordnung (10) mit dem Einlassanschluss des hydraulischen Verbrauchers (72) verbunden ist.

9. Hydrauliksystem nach Anspruch 8, ferner umfassend ein Umschaltventil (67, 79) mit mindestens einer ersten Position und einer zweiten Position, wobei in der ersten Position das System den ersten Zustand annimmt und in der zweiten Position des Umschaltventils das System einen zweiten Zustand annimmt, in dem die hydraulische Flussverstärkungsanordnung (10) umgangen wird.

10. Hydrauliksystem nach einem der Ansprüche 8 bis 9, wobei das Umschaltventil (79) eine dritte Position umfasst, wobei in der dritten Position des Umschaltventils (79) das System einen dritten Zustand annimmt, in dem der Versorgungsanschluss der Pumpe (60) mit dem zweiten Anschluss (22) der hydraulischen Flussverstärkungsanordnung (10) verbunden ist und der erste Anschluss (21) der hydraulischen Flussverstärkungsanordnung (10) mit dem Einlassanschluss des hydraulischen Verbrauchers (72) verbunden ist, und wobei die Drehrichtung der ersten Welle (15) und der zweiten Welle (16) im Vergleich zur Drehrichtung des Zustands, in dem sich das Umschaltventil (79) in der zweiten Position befindet, umgekehrt ist.

11. Hydrauliksystem nach einem der Ansprüche 8 bis 10, wobei ein Übersetzungsverhältnis der hydraulischen Flussverstärkungsanordnung (10) größer als 1, beispielsweise größer als 2 ist.

12. Hydrauliksystem zur Erhöhung der Kühleffizienz, umfassend eine Pumpe (92), einen hydraulischen Verbraucher (90), einen Arbeitsfluidtank (25), eine Kühleinrichtung (103) und die hydraulische Flussverstärkungsanordnung (10) nach einem der Ansprüche 1 bis 3, wobei der Tank (25) der hydraulischen Flussverstärkungsanordnung (10) in Fluidverbindung mit dem Arbeitsfluidtank steht oder den Arbeitsfluidtank bildet, wobei die Pumpe (92) den hydraulischen Verbraucher (90) mit gekühltem Arbeitsfluid aus dem Arbeitsfluidtank (25) versorgt, wobei in einem ersten Zustand ein Auslassanschluss (98) des hydraulischen Verbrauchers (90) in Fluidverbindung mit dem ersten Anschluss (21) der hydraulischen Flussverstärkungsanordnung (10) steht und der zweite Anschluss (22) der hydraulischen Flussverstärkungsanordnung (10) in Fluidverbindung mit einem Eingangsanschluss der Kühleinrichtung (103) steht und ein Ausgangsanschluss der Kühleinrichtung (103) so in Fluidverbindung mit dem Arbeitsfluidtank (25) steht, dass das gekühlte Arbeitsfluid in den Arbeitsfluidtank (25) zurückgeführt wird.

13. Hydrauliksystem nach Anspruch 12, ferner umfassend ein Umschaltventil (97) mit mindestens einer ersten Position und einer zweiten Position, wobei in der ersten Position das System den ersten Zustand annimmt und in der zweiten Position des Umschaltventils das System einen zweiten Zustand annimmt, in dem die hydraulische Flussverstärkungsanordnung (10) umgangen wird.

14. Hydrauliksystem nach einem der Ansprüche 13 bis 14, wobei ein Übersetzungsverhältnis der hydraulischen Flussverstärkungsanordnung (10) größer als 1, beispielsweise größer als 2 ist.

## Revendications

1. Agencement d'amplification d'écoulement hydraulique (10) comprenant un premier port (21), un second port (22) et un réservoir (25) pour un fluide de travail, comprenant en outre une première machine à couronne dentée de type à déplacement (11) ayant un premier engrenage interne et une seconde machine à couronne dentée de type à déplacement (12) ayant un second engrenage interne, dans lequel un port d'entrée (11a) de la première machine à couronne dentée (11) est relié au premier port (21) et un port de sortie (12b) de la seconde machine à couronne dentée (12) est relié au second port (22), dans lequel la première machine à couronne dentée de type à déplacement (11) est un moteur et dans lequel la seconde machine à couronne dentée de type à déplacement (12) est une pompe, dans lequel le réservoir (25) est en communication fluidique avec une première conduite de raccordement de réservoir (20) pour le fluide de travail, dans lequel un premier arbre (15) du premier engrenage interne et un second arbre (16) du second engrenage interne sont reliés de sorte que le premier arbre (15) et le second arbre (16) tournent à la même vitesse de rotation, dans lequel un premier volume de déplacement (V1) de la première machine à couronne dentée (11) est différent d'un second volume de déplacement (V2) de la seconde machine à couronne dentée (12), dans lequel un port d'entrée (12a) de la seconde machine à couronne dentée (12) est relié à un port de sortie (11b) de la première machine à couronne dentée (11) et à la première conduite de raccordement de réservoir (20), dans lequel le réservoir (25) est en communication fluidique avec la première conduite de raccordement de réservoir (20) par l'intermédiaire d'un moyen de clapet anti-retour (27), dans lequel le moyen de clapet anti-retour (27) est configuré pour empêcher le reflux du fluide de travail du port de sortie (11b) de la première machine à couronne dentée (11) dans le réservoir (25).

2. Agencement d'amplification d'écoulement hydraulique selon la revendication 1, dans lequel la première machine à couronne dentée (11) et la seconde machine à couronne dentée (12) sont un moteur gérotor ou un moteur à gérol.

3. Agencement d'amplification d'écoulement hydraulique selon l'une quelconque des revendications précédentes, dans lequel le premier arbre (15) et le second arbre (16) sont directement reliés.

4. Système hydraulique permettant de fournir une pression prédéfinie dans une conduite d'aspiration (55) d'une pompe (40) alimentant un consommateur hydraulique (35) à l'aide d'une conduite de pression (42), le système hydraulique comprenant une pompe (40) dotée d'une conduite d'aspiration (55), d'une conduite de pression (42) et d'un consommateur hydraulique (35) ayant une conduite de retour (47), la pompe (40) alimentant le consommateur hydraulique (35) à l'aide de la conduite de pression (42),
dans lequel le système comprend l'agencement d'amplification d'écoulement hydraulique (10) selon l'une quelconque des revendications précédentes, dans lequel, dans un premier état, la conduite de retour (47) du consommateur hydraulique (35) est reliée au premier port (21) de l'agencement d'amplification d'écoulement hydraulique (10) et le second port (22) de l'agencement d'amplification d'écoulement hydraulique (10) est en communication fluidique avec la conduite d'aspiration (55) de la pompe (40), le système comprenant en outre une seconde conduite de raccordement de réservoir (57) qui part de la conduite d'aspiration (55) et est en communication fluidique avec le réservoir (25) du fluide de travail de l'agencement d'amplification d'écoulement hydraulique (10) par l'intermédiaire d'un second moyen de clapet anti-retour (59), le second moyen de clapet anti-retour (59) s'ouvrant si la pression au niveau du port de sortie (22) de l'agencement d'amplification d'écoulement hydraulique (10) est supérieure à une valeur seuil de pression prédéfinie.

5. Système hydraulique selon la revendication 4, dans lequel un rapport de multiplication de l'agencement d'amplification d'écoulement hydraulique (10) est supérieur à 1, par exemple supérieur à 2,5.

6. Système hydraulique selon l'une quelconque des revendications 4 à 5, dans lequel le consommateur hydraulique (35) est un cylindre différentiel, dans lequel le rapport de multiplication de l'agencement d'amplification d'écoulement hydraulique (10) est supérieur à un rapport de sections du cylindre différentiel.

7. Système hydraulique selon l'une quelconque des revendications 4 à 6, comprenant en outre un robinet sélecteur (52), dans lequel, dans une première position du robinet sélecteur (52), le système adopte le premier état et, dans une deuxième position du robinet sélecteur (52), le système adopte un deuxième état dans lequel l'agencement d'amplification d'écoulement hydraulique (10) est contourné.

8. Système hydraulique permettant de fournir une plage d'écoulement prédéfinie à un port d'entrée d'un consommateur hydraulique (72, 83) alimenté en fluide de travail sous pression par une pompe (60), le système hydraulique comprenant une pompe (60) et un consommateur hydraulique (72, 83) doté d'un port d'entrée,
dans lequel le système comprend l'agencement d'amplification d'écoulement hydraulique (10) selon l'une quelconque des revendications 1 à 3 ;
dans lequel, dans un premier état, un port d'alimentation de la pompe est relié au premier port (21) de l'agencement d'amplification d'écoulement hydraulique (10) et le second port (22) de l'agencement d'amplification d'écoulement hydraulique (10) est relié au port d'entrée du consommateur hydraulique (72).

9. Système hydraulique selon la revendication 8, comprenant en outre un robinet sélecteur (67, 79) ayant au moins une première position et une deuxième position, dans lequel, dans la première position, le système adopte le premier état et, dans la deuxième position du robinet sélecteur, le système adopte un deuxième état dans lequel l'agencement d'amplification d'écoulement hydraulique (10) est contourné.

10. Système hydraulique selon l'une quelconque des revendications 8 à 9, dans lequel le robinet sélecteur (79) comprend une troisième position, dans lequel, dans la troisième position du robinet sélecteur (79) le système adopte le troisième état dans lequel le port d'alimentation de la pompe (60) est relié au second port (22) de l'agencement d'amplification d'écoulement hydraulique (10) et le premier port (21) de l'agencement d'amplification d'écoulement hydraulique (10) est relié au port d'entrée du consommateur hydraulique (72), et dans lequel le sens de rotation du premier arbre (15) et du second arbre (16) est inversé par rapport au sens de rotation de l'état dans lequel la robinet sélecteur (79) est dans la deuxième position.

11. Système hydraulique selon l'une quelconque des revendications 8 à 10, dans lequel un rapport de multiplication de l'agencement d'amplification d'écoulement hydraulique (10) est supérieur à 1, par exemple supérieur à 2.

12. Système hydraulique pour augmenter l'efficacité du refroidissement comprenant une pompe (92), un consommateur hydraulique (90), un réservoir de fluide de travail (25), un moyen de refroidissement (103) et l'agencement d'amplification d'écoulement hydraulique (10) selon l'une quelconque des revendications 1 à 3, dans lequel le réservoir (25) de l'agencement d'amplification d'écoulement hydraulique (10) est en liaison fluidique avec le réservoir de fluide de travail ou forme le réservoir de fluide de travail, dans lequel la pompe (92) fournit au consommateur hydraulique (90) un fluide de travail refroidi à partir du réservoir de fluide de travail (25), dans lequel, dans un premier état, un port de sortie (98) du consommateur hydraulique (90) est en liaison fluidique avec le premier port (21) de l'agencement d'amplification d'écoulement hydraulique (10) et le second port (22) de l'agencement d'amplification d'écoulement hydraulique (10) est en liaison fluidique avec un port d'entrée du moyen de refroidissement (103) et un port de sortie du moyen de refroidissement (103) est en liaison fluidique avec le réservoir de fluide de travail (25) de sorte que le fluide de travail refroidi est renvoyé dans le réservoir de fluide de travail (25).

13. Système hydraulique selon la revendication 12, comprenant en outre un robinet sélecteur (97) ayant au moins une première position et une deuxième position, dans lequel, dans la première position, le système adopte le premier état et, dans la deuxième position du robinet sélecteur, le système adopte un deuxième état dans lequel l'agencement d'amplification d'écoulement hydraulique (10) est contourné.

14. Système hydraulique selon l'une quelconque des revendications 13 à 14, dans lequel un rapport de multiplication de l'agencement d'amplification d'écoulement hydraulique (10) est supérieur à 1, par exemple supérieur à 2.
